# EUROPEAN PATENT APPLICATION

(11) **EP 4 667 919 A1**
(43) Date of publication of application: **24.12.2025**
(21) Application number: 24756220.0
(22) Date of filing: 07.02.2024
(51) Int. Cl.: G01N 23/20008, G01N 23/203, G01V 5/00

(54) **BACK SCATTERING INSPECTION DEVICE FOR INSPECTING M-LAYER STRUCTURED OBJECT UNDER INSPECTION**

(30) Priority: 15.02.2023 CN 202310112882
(71) Applicant: NUCTECH COMPANY LIMITED, Beijing 100084 (CN)
(72) Inventor: CHI, Haojie, Beijing 100084 (CN); ZONG, Chunguang, Beijing 100084 (CN); LIU, Bicheng, Beijing 100084 (CN); GUO, Junwei, Beijing 100084 (CN); CAO, Jinguo, Beijing 100084 (CN); LIU, Lei, Beijing 100084 (CN); JI, Zheng, Beijing 100084 (CN); WANG, Weizhen, Beijing 100084 (CN)
(74) Representative: Gunzelmann, Rainer
(86) International application number: PCT/CN2024/076604
(87) International publication number: WO 2024/169847

(57) **Abstract**

The present disclosure provides a backscattering inspection device for detecting an m-layer structured object under inspection, which is applied to the field of detection technology. The m-layer structured object under inspection at least includes an outer layer structure body and an inner layer structure body, where m is an integer greater than or equal to 2**.** The backscattering inspection device includes a ray generator, n detectors and a shielding assembly, wherein the ray generator is arranged above the outer layer structure body and configured to emit incident rays to the m-layer structured object under inspection. n detectors are arranged above the outer layer structure body and located in the circumferential direction of the incident rays to receive the inner layer scattered rays of the incident rays from the inner layer structure body, where n is an integer greater than or equal to 1**.** The shielding assembly is configured to at least partially surround the detectors, so as to obstruct a portion of the incident rays from reaching the detectors, and obstruct the outer layer scattered rays of the incident rays from the outer layer structure body from reaching the detectors.

## Description

This application claims the priority of China patent application No. 202310112882.X filed February 15th, 2023, the contents of which is hereby incorporated by reference.

### TECHNICAL FIELD

The present disclosure relates to the field of detection technology, in particular to a backscattering inspection device for detecting an m-layer structured object under inspection.

### BACKGROUND

At present, X-ray backscattering imaging technology has been widely applied in the field of security inspection of human body, cargos and vehicles. Backscatter imaging technology may detect the intensity of X-ray scattering by different substances so as to obtain the substance images of the inspected object within a certain depth. In practical application, the intensity of X-rays scattered by a certain point of the inspected object is inversely proportional to the square of the distance between the detector and the point. Therefore, in the case where a multi-layer structure body is detected with the inner layer structure as the target detection object, especially when the inner layer structure and the outer layer structure are spaced apart at a long distance, the intensity of scattered radiation from the outer layer structure detected by the detector is much greater than the intensity of scattered radiation from the inner layer structure. Further, the scattered radiation from the outer layer structure may greatly affect the imaging quality of the inner layer structure, so that it is impossible to clearly obtain the imaging of the inner layer structure based on the radiation received by the detector.

### SUMMARY

In one aspect of the present disclosure, a backscattering inspection device for detecting an m-layer structured object under inspection is provided. The m-layer structured object under inspection at least includes an outer layer structure body and an inner layer structure body, where m is an integer greater than or equal to 2. The backscattering inspection device includes: a ray generator arranged above the outer layer structure body and configured to emit incident rays to the m-layer structured object under inspection; n detectors arranged above the outer layer structure body and located in a circumferential direction of the incident rays, to receive inner layer scattered rays of incident rays from the inner layer structure body, wherein n is an integer greater than or equal to 1; and a shielding assembly configured to at least partially surround the detectors so as to obstruct a portion of the incident rays from reaching the detectors, and obstruct outer layer scattered rays of the incident rays from the outer layer structure body from reaching the detectors.

In some embodiments, the shielding assembly includes n shielding members in one-to-one correspondence with the n detectors, and each of the shielding members at least partially surrounds one of the detectors.

In some embodiments, the n shielding members at least include x first shielding members, each of which is formed into an I-shape and arranged on a side of the detector adjacent to the incident ray, where x is an integer greater than or equal to 1 and less than or equal to n.

In some embodiments, the n shielding members at least include y second shielding members, each of which is formed into an L-shape, and each of the second shielding members in an L-shape includes a vertical section and a horizontal section, wherein the vertical section is arranged on a side of one detector of the detectors adjacent to the incident ray, and the horizontal section is arranged on a side of the one detector adjacent to the outer layer structure body, where y is greater than or equal to 1 and less than or equal to n.

In some embodiments, the second shielding member is switched between a storage position where the vertical section and the horizontal section are arranged in a folded manner, and a working position where the vertical section and the horizontal section are unfolded into an L-shape.

In some embodiments, the n shielding members at least include: x first shielding members, each of which is formed into an I-shape and arranged on a side of one detector of the detectors adjacent to the incident ray; and y second shielding members, each of which is formed into an L-shape, and each of the second shielding members in an L-shape includes a vertical section and a horizontal section, wherein the vertical section is arranged on a side of one detector of the detectors adjacent to the incident ray, and the horizontal section is arranged on a side of the detector adjacent to the outer layer structure body, where x is an integer greater than or equal to 1, y is an integer greater than or equal to 1, n is an integer greater than or equal to 2, and x+y≤n.

In some embodiments, the backscattering inspection device further comprises h radiation protection members, wherein the x first shielding members, the y second shielding members and the h radiation protection members are configured to jointly enclose a ray channel, and the incident ray emitted by the ray generator is emitted to the m-layer structured object under inspection through the ray channel, where h is an integer greater than or equal to 1.

In some embodiments, the ray channel is constructed as a collimation slit.

In some embodiments, the backscattering inspection device further comprises a collimator, wherein the incident ray emitted by the ray generator is emitted to the m-layer structured object under inspection through a collimation slit of the collimator.

In some embodiments, with a center line of the incident ray as a symmetrical center, two shielding members that are oppositely arranged are configured to be movable towards and away from each other, where n is an even number greater than or equal to 2.

In some embodiments, each of the shielding members is formed by splicing a plurality of elongated slats, each of which extends to an upper surface of the outer layer structure body, and a shape of an end of the plurality of elongated slats in contact with the upper surface of the outer layer structure body is configured to match the upper surface of the outer layer structure body.

In some embodiments, each of the shielding members extends to an upper surface of the outer-layer structure, and an end of each of the shielding members in contact with the upper surface of the outer-layer structure is provided with an elastic member.

In some embodiments, each of the shielding members is formed of an elastic material and extends to an upper surface of the outer layer structure body.

In some embodiments, the backscattering inspection device further comprises a load assembly movably arranged on the outer layer structure body, wherein all of the ray generator, the n detectors and the shielding assembly are arranged on the load assembly.

In some embodiments, the load assembly is further provided with a geographic monitoring member for monitoring surface topography of the outer layer structure body, and the geographic monitoring member includes at least one of a visual detection member, a laser radar and a positioning member.

In some embodiments, the backscattering inspection device further comprises a control module, wherein the control module is communicatively connected with the geographic monitoring member, and the geographic monitoring member is configured to transmit topographic information of the surface topography of the outer layer structure body to the control module, the n detectors and the shielding assembly are both movably arranged on the load assembly in a longitudinal direction; the control module is communicatively connected with both the shielding assembly and the n detectors; and the control module is configured to control descending heights of the shielding assembly and the n detectors according to the topographic information.

In some embodiments, the control module is communicatively connected with the ray generator, and the control module is configured to: control the ray generator to work under at least a first radiation energy and a second radiation energy, and the detector obtains at least two backscattering signals under at least the first radiation energy and the second radiation energy.

Additional aspects and advantages of the present disclosure will be set forth in part in the following description, and in part will become apparent from the following description, or may be learned by practice of the present disclosure.

### BRIEF DESCRIPTION OF THE DRAWINGS

In order to more completely understand the present disclosure and its advantages, reference will now be made to the following description in conjunction with the accompanying drawings, in which:

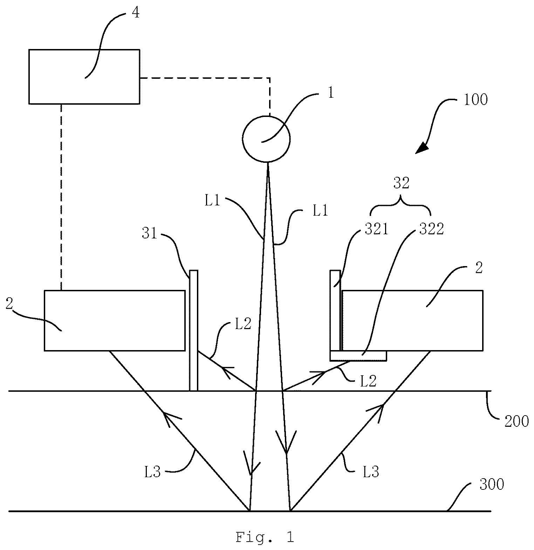

Fig. 1 is a structural schematic view of a backscattering inspection device for detecting an m-layer structured object under inspection according to the embodiment of the present disclosure.

### Reference numerals:

Backscattering inspection device 100, outer layer structure body 200, the inner layer structure body 300,
Ray generator 1, detector 2,
First shielding member 31, second shielding member 32, vertical section 321, vertical section 322,
Control module 4, incident ray L1, outer layer scattered ray L2 and inner layer scattered ray L3.

### DETAILED DESCRIPTION

Hereinafter, the embodiments of the present disclosure will be described with reference to the accompanying drawings. However, it should be understood that, these descriptions which are only exemplary, are not intended to limit the scope of the present disclosure. Furthermore, in the following description, descriptions of common knowledge structures and technologies are omitted to avoid that the concepts of the present disclosure are unnecessarily confused. In addition, various embodiments of the present disclosure provided below as well as the technical features therein may be arbitrarily combined with each other.

The terms used here which are only for the purpose of describing specific embodiments, are not intended to limit the present disclosure. Furthermore, the terms "comprising", "including" and the like used here indicate the presence of features, steps, operations and/or components, but do not exclude the presence or addition of one or more other features, steps, operations or components. All terms (including technical and scientific terms) used here have the meanings usually understood by those skilled in the art unless otherwise defined. It should be noted that, the terms used here should be construed as having meanings consistent with the context of this specification, but should not be interpreted in an idealized or over-stereotyped way.

At present, X-ray backscattering imaging technology has been widely applied in the field of security inspection of human body, cargos and vehicles. Backscatter imaging technology may detect the intensity of X-ray scattering by different substances so as to obtain the substance images of the object within a certain depth. In practical application, the intensity of X-rays scattered by a certain point of the object is inversely proportional to the square of the distance between the detector and the point. Therefore, in the case where a multi-layer structured body is detected with the inner layer structure as the target detection object, especially when the inner layer structure and the outer layer structure are spaced apart at a long distance, the intensity of scattered radiation from the outer layer structure detected by the detector is much greater than the intensity of scattered radiation from the inner layer structure. Further, the scattered radiation from the outer layer structure may greatly affect the imaging quality of the inner layer structure, so that it is impossible to clearly obtain the imaging of the inner layer structure based on the radiation received by the detector.

The embodiment of the present disclosure provides a backscattering inspection device for detecting an m-layer structured object under inspection, which has the advantages of strong anti-interference ability and accurate inspection.

In the backscattering inspection device for detecting an m-layer structured object under inspection according to the embodiment of the present disclosure, a shielding assembly configured to at least partially surround the detectors is provided to facilitate obstructing a portion of the incident rays from reaching the detectors and obstructing outer layer scattered rays of the incident rays from the outer layer structure body from reaching the detectors, so as to reduce the emission of the incident rays to the detectors and reduce the interference signals caused by the emission of the outer layer scattered rays to the detectors, so that backscattering images generated by n detectors according to the backscattering signals from the inner layer structure body may more accurately embody the shape and construction of the inner layer structure body.

Referring to Fig. 1, the backscattering inspection device 100 for detecting an m-layer structured object under inspection according to the embodiment of the present disclosure will be described below. The m-layer structured object under inspection may at least include an outer layer structure body 200 and an inner layer structure body 300, where m is an integer greater than or equal to 2. For example, when m is equal to 2, the m-layer structured object under inspection may only include the outer layer structure body 200 and the inner layer structure body 300. When m is equal to 3, the m-layer structured object under inspection may include an outer layer structure body, a secondary outer layer structure body and an inner layer structure body. When m is equal to 4, the m-layer structured object under inspection may include a first outer layer structure body, a second outer layer structure body, a third outer layer structure body and an inner layer structure body. When m is equal to 5, 6, 7, 8, etc., the structural shape of the m-layer structured object under inspection is so forth, which will not be described in detail here.

The main purpose of inspecting the m-layer structured object under inspection is to eliminate the interference of the scattered rays from the outer layer structure body of m-1 layer, and to detect the shape of the inner layer structure body through the scattered rays from the inner layer structure body. For example, the backscattering inspection device 100 of the present disclosure may be used to perform backscattering inspection of the internal floating roof of a large storage tank or the internal structure of an ancient building and the like. The above-described two specific application scenes which are only exemplary descriptions, cannot be understood as limiting the present disclosure.

Description will be made below by taking the m-layer structured object under inspection, where m is equal to 2, which may only include the outer layer structure body 200 and the inner layer structure body 300 as an example.

As shown in Fig. 1, the backscattering inspection device 100 for detecting an m-layer structured object under inspection according to the embodiment of the present disclosure comprises a ray generator 1, n detectors 2 and a shielding assembly.

Specifically, referring to Fig. 1, the ray generator 1 is arranged above the outer layer structure body 200 and configured to emit the incident rays L1 to the inspected object with a multi-layer structure; n detectors 2 are arranged above the outer layer structure body 200 and located in the circumferential direction of the incident rays L1 to receive the inner layer scattered ray L3 of the incident rays L1 from the inner layer structure body 300, where n is an integer greater than or equal to 1. The shielding assembly is configured to at least partially surround the detectors 2 to obstruct a portion of the incident rays L1 from reaching the detectors 2, and obstruct outer layer scattered rays L2 of the incident rays L1 from the outer layer structure body 200 from reaching the detectors 2.

It may be understood that, the ray generator 1 may emit the incident rays L1 emitted to the outer layer structure body 200, so that a portion of the incident rays L1 may pass through the outer layer structure body 200, and a portion of the incident rays L1 are scattered by the surface of the outer layer structure body 200. The incident rays L1 passing through the outer layer structure body 200 continues to be emitted to the inner layer structure body 300, so that part of the incident rays L1 are scattered on the surface of the inner layer structure body 300. The n detectors 2 are used to receive the inner layer scattered rays L3 of the incident rays L1 from the inner layer structure body 300. In other words, the n detectors 2 may obtain backscattering signals from the inner layer structure body 300 accordingly, thereby generating backscattering images from which the shape and construction of the inner layer structure body 300 may be analyzed.

However, the n detectors 2 may also receive the outer layer scattered rays L2 scattered by the incident rays L1 incident on the outer layer structure body 200 whilst receiving the inner layer scattered rays L3, and the outer layer scattered rays L2 may cause the interference signals, so that the generated backscattering images cannot accurately embody the shape and construction of the inner layer structure body 300. Therefore, it is necessary to provide a shielding assembly configured to at least partially surround the detectors 2 is provided to facilitate obstructing a portion of the incident rays L1 from reaching the detectors 2 and obstructing the outer layer scattered rays L2 of the incident rays L1 from the outer layer structure body 200 from reaching the detectors 2, so as to reduce the emission of the incident rays L1 to the detectors 2 and reduce the interference signals caused by the emission of the outer layer scattered rays L2 to the detectors 2, so that the generated backscattering images may more accurately embody the shape and construction of the inner layer structure body 300.

In the backscattering inspection device 100 for detecting an m-layer structured object under inspection according to the embodiment of the present disclosure, by providing a shielding assembly, the shielding assembly configured to at least partially surround the detectors 2 is provided to facilitate obstructing a portion of the incident rays L1 from reaching the detectors 2 and obstructing the outer layer scattered rays L2 of the incident rays L1 from the outer layer structure body 200 from reaching the detectors 2, so as to reduce the emission of the incident rays L1 to the detectors 2 and reduce the interference signals caused by the emission of the outer layer scattered rays L2 to the detectors 2, so that backscattering images generated by n detectors 2 according to the backscattering signals from the inner layer structure body 300 may more accurately embody the shape and construction of the inner layer structure body 300.

According to some embodiments of the present disclosure, as shown in Fig. 1, the shielding assembly may include n shielding members in one-to-one correspondence with the n detectors 2, and each of the shielding members at least partially surrounds one of the detectors 2. Thus, it is possible to facilitate implementing that the shielding assembly is configured to at least partially surround the detectors 2. Among them, each shielding member at least partially surrounds one detector 2, which may facilitate the arrangement of the shielding assembly with a favorable shielding effect.

In some embodiments of the present disclosure, referring to Fig. 1, n shielding members at least include x first shielding members 31, each of which is formed into an I-shape and arranged on a side of one detector of the detectors 2 adjacent to the incident ray L1, where x is an integer greater than or equal to 1 and less than or equal to n. It may be understood that, the first shielding member 31 may extend to the surface of the outer layer structure body 200. The n shielding members may all be the first shielding members 31. The n shielding members may also be partially the first shielding members 31 and partially the shielding members of other constructions. The first shielding member 31 in an I-shape may facilitate obstructing a portion of the incident rays L1 from reaching the detector 2 and obstructing the outer layer scattered rays L2 of the incident rays L1 from the outer layer structure body 200 from reaching the detector 2.

According to some embodiments of the present disclosure, as shown in Fig. 1, the n shielding members at least include y second shielding members 32, each of which is formed into an L-shape, and each of the second shielding members 32 in an L-shape includes a vertical section 321 and a horizontal section 322, wherein the vertical section 321 is arranged on a side of one detector of the detectors 2 adjacent to the incident ray L1, and the horizontal section 322 is arranged on a side of the detector 2 adjacent to the outer layer structure body 200, where y is greater than or equal to 1 and less than or equal to n. It may be understood that, the n shielding members may all be the second shielding members 32. The n shielding members may also be partially the second shielding members 32 and partially the shielding members of other constructions. The second shielding member 32 in an L-shape may facilitate obstructing a portion of the incident rays L1 from reaching the detector 2 and obstructing the outer layer scattered rays L2 of the incident rays L1 from the outer layer structure body 200 from reaching the detector 2.

In some embodiments of the present disclosure, referring to Fig. 1, the second shielding member 32 may be switched between a storage position where the vertical section 321 and the horizontal section 322 are arranged in a folded manner, and a working position where the vertical section 321 and the horizontal section 322 are unfolded into an L-shape. It may be understood that, the storage position and the working position may be the same position. In other words, the second shielding member 32 may be fixedly arranged. When working, the second shielding member 32 is unfolded into an L-shape, the vertical section 321 is arranged on a side of one detector of the detectors 2 adjacent to the incident rays L1, and the horizontal section 322 is arranged on a side of the detector 2 adjacent to the outer layer structure body 200. When not working, the vertical section 321 and the horizontal section 322 are arranged in a folded manner.

The storage position and the working position may also be different positions. In other words, the second shielding member 32 may move from the storage position to the working position, and the second shielding member 32 may also move from the working position to the storage position. When needed, the second shielding member 32 moves from the storage position to the working position. At the working position, the second shielding member 32 is unfolded into an L-shape, the vertical section 321 is arranged on the side of one detector of the detectors 2 adjacent to the incident rays L1, and the horizontal section 322 is arranged on the side of the detector 2 adjacent to the outer layer structure body 200. When not in use, the second shielding member 32 moves from the working position to the storage position. At the storage position, the vertical section 321 and the horizontal section 322 are arranged in a folded manner. Thus, the second shielding member 32 of the present disclosure is conveniently stored, so as to protect the second shielding member 32 and prolong the service life of the second shielding member 32.

According to some embodiments of the present disclosure, as shown in Fig. 1, the n shielding members at least include x first shielding members 31 and y second shielding members 32. Specifically, each first shielding member 31 is formed into an I-shape, and each first shielding member 31 is arranged on a side of one detector of the detectors 2 adjacent to the incident rays L1. Each second shielding member 32 is formed into an L-shape, and each second shielding member 32 in an L-shape includes a vertical section 321 and a horizontal section 322. The vertical section 321 is arranged on a side of one detector of the detectors 2 adjacent to the incident rays L1, and the horizontal section 322 is arranged on a side of the detector 2 adjacent to the outer layer structure body 200, where x is an integer greater than or equal to 1, y is an integer greater than or equal to 1, n is an integer greater than or equal to 2, and x+y≤n.

It may be understood that, the n shielding members may be in one part the first shielding members 31 and the other part the second shielding members 32. The n shielding members may also be partially the first shielding members 31, partially the second shielding members 32, and in a remaining part the shielding members of other constructions. The first shielding member 31 in an I-shape may facilitate obstructing a portion of the incident rays L1 from reaching the detector 2 and shielding the outer layer scattered rays L2 of the incident rays L1 from the outer layer structure body 200 from reaching the detector 2. The second shielding member 32 in an L-shape may facilitate obstructing a portion of the incident rays L1 from reaching the detector 2 and obstructing the outer layer scattered rays L2 of the incident rays L1 from the outer layer structure body 200 from reaching the detector 2.

In some embodiments of the present disclosure, referring to Fig. 1, the backscattering inspection device 100 may further comprise h radiation protection members, wherein x first shielding members 31, y second shielding members 32 and h radiation protection members are configured to jointly enclose a ray channel. The incident rays L1 emitted by the ray generator 1 are emitted to the m-layer structured object under inspection through the ray channel, where h is an integer greater than or equal to 1. Thus, the x first shielding members 31, the y second shielding members 32 and the h radiation protection members may facilitate constructing the ray channel. The ray channel may facilitate confining the incident rays L1 to be emitted to the m-layer structured object under inspection. Specifically, the x first shielding members 31 and the y second shielding members 32 may avoid the interference signals caused by the reaching of the incident rays L1 to the detector 2, and the h radiation protection members may prevent the radiation pollution caused by the emission of the incident rays L1 to other places than the ray channel.

According to some embodiments of the present disclosure, the ray channel is constructed as a collimation slit. Among them, the incident rays L1 may be emitted to the m-layer structured object under inspection through the collimation slit. The collimation slit may facilitate strengthening the intensity of the incident rays L1, which is conductive for the n detectors 2 to receive strong backscattering signals of the inner layer structure body 300, so as to generate clear backscattering images. It may be understood that, the ray channel is constructed as a collimation slit so that the shielding assembly may realize the shielding function and the function of the collimator, which has wide applicability and saves the product cost.

According to some embodiments of the present disclosure, the backscattering inspection device 100 further comprises a collimator, wherein the incident ray L1 emitted by the ray generator 1 is emitted to the m-layer structured object under inspection through a collimation slit of the collimator. It may be understood that, the collimation slit may facilitate strengthening the intensity of the incident rays L1, which is conductive for the n detectors 2 to receive strong backscattering signals of the inner layer structure body 300, so as to generate clear backscattering images.

In some embodiments of the present disclosure, referring to Fig. 1, with a center line of the incident ray L1 as a symmetrical center, two shielding members that are oppositely arranged are configured to be movable towards and away from each other, where n is an even number greater than or equal to 2. Thus, the two shielding members that are oppositely arranged may move towards or away from each other according to the cross-sectional area of the beam of the incident rays L1, so that the channel enclosed between the two shielding members confines the incident rays L1 to be smoothly emitted to the m-layer structured object under inspection.

According to some embodiments of the present disclosure, each of the shielding members is formed by splicing a plurality of elongated slats, each of which extends to an upper surface of the outer layer structure body 200, and the shape of an end of the plurality of elongated slats in contact with the upper surface of the outer layer structure body 200 is configured to match the upper surface of the outer layer structure body 200. Thus, the shielding member formed by splicing a plurality of elongated slats may facilitate matching with the surface shape of the outer layer structure body 200, so that the shielding member is favorably matched with the outer layer structure body 200, and the outer layer scattered rays L2 are not easily reached the detector 2.

According to some embodiments of the present disclosure, each of the shielding members extends to an upper surface of the outer-layer structure 200, and an end of each of the shielding members in contact with the upper surface of the outer-layer structure 200 is provided with an elastic member. Among them, the elastic member may facilitate matching with the upper surface of the outer layer structure body 200, so that the shielding member is favorably matched with the outer layer structure body 200, and the outer layer scattered rays L2 are not easily emitted to the detector 2.

According to some embodiments of the present disclosure, each of the shielding members is formed of an elastic material and extends to an upper surface of the outer layer structure body 200. For example, each shielding member may be a curtain shielding member. The curtain shielding member may facilitate matching the upper surface of the outer layer structure body 200, so that the shielding member is favorably matched with the outer layer structure body 200, and the outer layer scattered rays L2 are not easily reached the detector 2.

In some embodiments of the present disclosure, the backscattering inspection device 100 may further comprise a load assembly movably arranged on the outer layer structure body 200, wherein all of the ray generator 1, the n detectors 2 and the shielding assembly are arranged on the load assembly. Thus, the load assembly may facilitate bearing the ray generator 1, the n detectors 2 and the shielding assembly to reach a position to be detected, which may expand the application range of the backscattering inspection device 100.

According to some embodiments of the present disclosure, the load assembly is further provided with a geographic monitoring member for monitoring the surface topography of the outer layer structure body 200, and the geographic monitoring member includes at least one of a visual detection member, a laser radar and a positioning member. Thus, the geographic monitoring member may facilitate obtaining topographical information of a surface topography of the outer layer structure body 200, and the topographical information may serve as important reference information for the layout of the backscattering inspection device 100 on the outer layer structure body 200.

In some embodiments of the present disclosure, as shown in Fig. 1, the backscattering inspection device 100 may further comprise a control module 4, wherein the control module 4 is communicatively connected with the geographic monitoring member, and the geographic monitoring member is configured to transmit the topographical information of the surface topography of the outer layer structure body 200 to the control module 4, the n detectors 2 and the shielding assembly are both movably arranged on the load assembly in a longitudinal direction; the control module 4 is communicatively connected with both the shielding assembly and the n detectors 2; and the control module 4 is configured to control descending heights of the shielding assembly and the n detectors 2 according to the topographical information. Thus, it is possible to facilitate arranging the n detectors 2 at a proper distance from the outer layer structure body 200, so that the n detectors 2 may obtain high-quality backscattering signals. Correspondingly, the shielding assembly may facilitate shielding the interference signals as the n detectors 2 descend to a proper height.

According to some embodiments of the present disclosure, as shown in Fig. 1, the control module 4 is communicatively connected with the ray generator 1, and the control module 4 is configured to: control the ray generator 1 to work under at least a first radiation energy and a second radiation energy, and the detector 2 obtains at least two backscattering signals under at least the first radiation energy and the second radiation energy. It may be understood that, since the backscattering inspection device 100 of the present disclosure has wide universality, it may be applied to an m-layer structured object under inspection having different shapes and constructions, whose thickness of the outer layer structure body 200 with an m-layer structure might not be uniform everywhere, and whose thickness of the inner layer structure body 300 might not be uniform everywhere, and whose distance between the inner layer structure body 300 and the outer layer structure body 200 might not be uniform everywhere. Thus, the ray generator 1 is controlled to work under at least a first radiation energy and a second radiation energy, so that the detector 2 obtains at least two backscattering signals under at least the first radiation energy and the second radiation energy. These two backscattering signals may have close intensities so as to generate clear backscattering images and facilitate analyzing the inner layer structure body 300.

In the description of the present disclosure, it is to be understood that, the orientational or positional relations indicated by the terms "center", "longitudinal", "transverse", "length", "width", "thickness", "up", "down", "front", "rear", "left", "right" , "vertical", "horizontal", "top", "bottom", "inside", "outside", "clockwise", "counterclockwise" "axial", "radial" and "circumferential", which are based on the orientational or positional relations shown by the accompanying drawings, are only for facilitating description of the present disclosure and simplifying the description, rather than indicating or implying that the device or element referred thereto has to present a particular orientation, and be constructed and operated in a particular orientation, so that it cannot be understood as limiting the present disclosure. In addition, the features defined as "first" and "second" may explicitly or implicitly include one or more of these features. In the description of the present disclosure, unless otherwise specified, the meaning of "a plurality of" is two or more.

In the description of the present disclosure, it is to be noted that unless otherwise specified and limited, the terms "mounted", "connected with" and "connected to", which should be broadly understood, for example, may be fixed connection, detachable connection or integrated connection; may be mechanical connection or electrical connection; may be direct connection, indirect connection through an intermediate medium and communication inside two elements. For those of ordinary skill in the art, the specific meanings of the above-described terms in the present disclosure may be understood according to specific conditions.

In the description of this specification, descriptions referring to the terms such as "one embodiment", "some embodiments", "exemplary embodiments", "examples", "specific examples" or "some examples" mean that specific features, structures, materials or characteristics described in conjunction with this embodiment or example are included in at least one embodiment or example of the present disclosure. In this specification, the schematic expressions of the above-described terms do not necessarily refer to the same embodiment or example. Moreover, the specific features, structures, materials or characteristics described may be combined in a suitable manner in any one or more embodiments or examples.

Although the embodiments of the present disclosure have been shown and described, those skilled in the art may understand that: multiple changes, modifications, substitutions and variations may be made to these embodiments without departing from the principles and purposes of the present disclosure, and the scope of the present disclosure is defined by the claims and their equivalents.

It may be understood by those skilled in the art that, the features recited in various embodiments and/or claims of the present disclosure may be in combinations and/or conjunctions, even if such combinations or conjunctions are not explicitly recited in the present disclosure. In particular, the features recited in various embodiment and/or claims of that present disclosure may be in combinations and/or conjunctions without departing from the spirit and teaching of the present disclosure. All these combinations and/or conjunctions are within the scope of the present disclosure.

Although the present disclosure has been shown and described with reference to specific exemplary embodiments of the present disclosure, it should be understood by those skilled in the art that, multiple changes in form and details may be made to the present disclosure without departing from the spirit and scope of the present disclosure as defined by the appended claims and their equivalents. Therefore, the scope of the present disclosure should not be limited to the above-described embodiments, but should be determined not only by the appended claims, but also by equivalents thereof.

## Claims

1. A backscattering inspection device for detecting an m-layer structured object under inspection, wherein the m-layer structured object under inspection at least includes an outer layer structure body and an inner layer structure body, where m is an integer greater than or equal to 2, wherein the backscattering inspection device comprises:
a ray generator arranged above the outer layer structure body and configured to emit incident rays to the m-layer structured object under inspection;
n detectors arranged above the outer layer structure body and located in a circumferential direction of the incident rays, to receive inner layer scattered rays of the incident rays from the inner layer structure body, wherein n is an integer greater than or equal to 1; and
a shielding assembly configured to at least partially surround the detectors so as to obstruct a portion of the incident rays from reaching the detectors, and obstruct outer layer scattered rays of the incident rays from the outer layer structure body from reaching the detectors.

2. The backscattering inspection device according to claim 1, wherein the shielding assembly includes n shielding members in one-to-one correspondence with the n detectors, and each of the shielding members at least partially surrounds one of the detectors.

3. The backscattering inspection device according to claim 2, wherein the n shielding members at least include x first shielding members, each of which is formed into an I-shape and arranged on a side of the detector adjacent to the incident ray, where x is an integer greater than or equal to 1 and less than or equal to n.

4. The backscattering inspection device according to claim 2, wherein the n shielding members at least include y second shielding members, each of which is formed into an L-shape, and each of the second shielding members in an L-shape includes a vertical section and a horizontal section, wherein the vertical section is arranged on a side of one detector of the detectors adjacent to the incident ray, and the horizontal section is arranged on a side of the one detector adjacent to the outer layer structure body, where y is greater than or equal to 1 and less than or equal to n.

5. The backscattering inspection device according to claim 4, wherein the second shielding member is switched between a storage position where the vertical section and the horizontal section are arranged in a folded manner, and a working position where the vertical section and the horizontal section are unfolded into an L-shape.

6. The backscattering inspection device according to claim 2, wherein the n shielding members at least include:
x first shielding members, each of which is formed into an I-shape and arranged on a side of one detector of the detectors adjacent to the incident ray; and
y second shielding members, each of which is formed into an L-shape, and each of the second shielding members in an L-shape includes a vertical section and a horizontal section, wherein the vertical section is arranged on a side of one detector of the detectors adjacent to the incident ray, and the horizontal section is arranged on a side of the detector adjacent to the outer layer structure body, where x is an integer greater than or equal to 1, y is an integer greater than or equal to 1, n is an integer greater than or equal to 2, and x+y≤n.

7. The backscattering inspection device according to claim 6, further comprising:
h radiation protection members, wherein the x first shielding members, the y second shielding members and the h radiation protection members are configured to jointly enclose a ray channel, and the incident ray emitted by the ray generator is emitted to the m-layer structured object under inspection through the ray channel, where h is an integer greater than or equal to 1.

8. The backscattering inspection device according to claim 7, wherein the ray channel is constructed as a collimation slit.

9. The backscattering inspection device according to any one of claims 1 to 7, further comprising a collimator, wherein the incident ray emitted by the ray generator is emitted to the m-layer structured object under inspection through a collimation slit of the collimator.

10. The backscattering inspection device according to claim 2, wherein with a center line of the incident ray as a symmetrical center, two shielding members that are oppositely arranged are configured to be movable towards and away from each other, where n is an even number greater than or equal to 2.

11. The backscattering inspection device according to claim 2, wherein each of the shielding members is formed by splicing a plurality of elongated slats, each of which extends to an upper surface of the outer layer structure body, and a shape of an end of the plurality of elongated slats in contact with the upper surface of the outer layer structure body is configured to match the upper surface of the outer layer structure body.

12. The backscattering inspection device according to claim 2, wherein each of the shielding members extends to an upper surface of the outer-layer structure, and an end of each of the shielding members in contact with the upper surface of the outer-layer structure is provided with an elastic member.

13. The backscattering inspection device according to claim 2, wherein each of the shielding members is formed of an elastic material and extends to an upper surface of the outer layer structure body.

14. The backscattering inspection device according to claim 1, further comprising:
a load assembly movably arranged on the outer layer structure body, wherein all of the ray generator, the n detectors and the shielding assembly are arranged on the load assembly.

15. The backscattering inspection device according to claim 14, wherein the load assembly is further provided with a geographic monitoring member for monitoring surface topography of the outer layer structure body, and the geographic monitoring member includes at least one of a visual detection member, a laser radar and a positioning member.

16. The backscattering inspection device according to claim 15, further comprising a control module,
wherein the control module is communicatively connected with the geographic monitoring member, and the geographic monitoring member is configured to transmit topographic information of the surface topography of the outer layer structure body to the control module,
the n detectors and the shielding assembly are both movably arranged on the load assembly in a longitudinal direction; the control module is communicatively connected with both the shielding assembly and the n detectors; and the control module is configured to control descending heights of the shielding assembly and the n detectors according to the topographic information.

17. The backscattering inspection device according to claim 16, wherein the control module is communicatively connected with the ray generator, and the control module is configured to: control the ray generator to work under at least a first radiation energy and a second radiation energy, and the detector obtains at least two backscattering signals under at least the first radiation energy and the second radiation energy.
